(19) Europäisches Patentamt
European Patent Office
Office européen des brevets

(11) **EP 4 206 129 A1**

(12) **EUROPEAN PATENT APPLICATION**
published in accordance with Art. 153(4) EPC

(43) Date of publication:
**05.07.2023 Bulletin 2023/27**

(21) Application number: **21872201.5**

(22) Date of filing: **10.09.2021**

(51) International Patent Classification (IPC):
*C01B 32/318* (2017.01)    *C02F 1/28* (2023.01)
*B01J 20/20* (2006.01)

(52) Cooperative Patent Classification (CPC):
**B01J 20/20; C01B 32/318; C02F 1/28**

(86) International application number:
**PCT/JP2021/033257**

(87) International publication number:
**WO 2022/065070 (31.03.2022 Gazette 2022/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.09.2020 JP 2020158516**

(71) Applicant: **Kuraray Co., Ltd.
Kurashiki-shi, Okayama 710-0801 (JP)**

(72) Inventors:
• **IWASAKI, Hideharu
Osaka-shi, Osaka 530-8611 (JP)**
• **MIYAKE, Akira
Osaka-shi, Osaka 530-8611 (JP)**

(74) Representative: **Müller-Boré & Partner
Patentanwälte PartG mbB
Friedenheimer Brücke 21
80639 München (DE)**

(54) **ACTIVATED CARBON AND WATER TREATMENT METHOD USING SAID ACTIVATED CARBON**

(57)    An object of the present invention is to provide an activated carbon that can efficiently remove fluorine-containing organic compounds and a treatment method of water containing fluorine-containing organic compounds. An activated carbon according to an aspect of the present invention has an average particle diameter of 0.1 to 10 mm, a BET specific surface area of 500 $m^2$/g or more and 2000 $m^2$/g or less, and a porosity inside a particle of 10% or more and 40% or less as obtained by X-ray CT. A water treatment method according to another aspect of the present invention includes a step of bringing the activated carbon into contact with water to be treated containing a fluorine-containing organic compound to obtain treated water having a fluorine-containing organic compound content of 0.1 ppb or less.

FIG.1

EP 4 206 129 A1

**Description**

**Technical Field**

The present invention relates to an activated carbon and a water treatment method using the activated carbon.

**Background Art**

Fluorine-containing organic compounds have unique properties (excellent in heat resistance and chemical resistance, usable under severe conditions, having no light absorbing ability, etc.) that cannot be achieved by other substances. Thus, the compounds have been used in various applications, such as surfactants, emulsifiers, water repellents, fire extinguishing agents, waxes, carpet cleaning agents, and coating agents. Applications of fluorine-containing organic compounds as functional materials, such as surface treatment agents for semiconductors and fuel cell constituent materials, have also been increasing recently.

However, researchers mainly in the United States and Canada have started reporting since some years ago that some fluorine-containing organic compounds are accumulated in environmental water and wild organisms. Typical examples thereof are perfluorocarboxylic acids typified by perfluorooctanoic acid (PFOA: $C_7F_{15}COOH$) and perfluorosulfonic acids typified by perfluorooctanesulfonic acid (PFOS: $C_8F_{17}SO_3H$). As a result of subsequent participation of researchers in Europe and Japan into environmental analysis research, it was revealed that these compounds are present in the environment on a global scale including our country. In response to such circumstances, efforts have started to reduce the environmental risk of fluorine-containing organic compounds (PFCs).

Patent Literature 1 discloses a method for recovering PFOA using granular activated carbon.

The method of using activated carbon in the treatment of PFOA or the like as in Patent Literature 1 has a great economic advantage, but the treatment efficiency is not satisfactory in the conventional technique. In view of the above current situation, an object of the present invention is to provide an activated carbon capable of efficiently removing fluorine-containing organic compounds and a method for treating water containing fluorine-containing organic compounds.

**Citation List**

**Patent Literature**

Patent Literature 1: US 2005/0000904 A

**Summary of Invention**

As a result of intensive studies, the inventors of the present invention found that fluorine-containing organic compounds can be efficiently removed by using a fluorine-containing organic compound removing material or a water treatment method having the following configuration.

An activated carbon according to an aspect of the present invention has an average particle diameter of 0.1 to 10 mm, a BET specific surface area of 500 $m^2$/g or more and 2000 $m^2$/g or less, and a porosity inside a particle of 10% or more and 40% or less as obtained by X-ray CT.

A water treatment method according to another aspect of the present invention includes a step of bringing the activated carbon into contact with water to be treated containing a fluorine-containing organic compound to obtain treated water having a fluorine-containing organic compound content of 0.1 ppb or less.

**Brief Description of Drawings**

FIG. 1 is an X-ray CT sectional image of an activated carbon of Example 1.
FIG. 2 is an image processing screen of the X-ray CT sectional image of the activated carbon of Example 1.
FIG. 3 is an X-ray CT sectional image of an activated carbon of Comparative Example 1.
FIG. 4 is an image processing screen of the X-ray CT sectional image of the activated carbon of Comparative Example 1.

**Description of Embodiments**

Hereinafter, embodiments according to the present invention will be specifically described, but the present invention is not limited to the embodiments.

An activated carbon according to an embodiment of the present invention has an average particle diameter of 0.1 to 10 mm, a BET specific surface area of 500 $m^2$/g or more and 2000 $m^2$/g or less, and a void inside a particle of 10% or more and 40% or less as obtained by X-ray CT.

The activated carbon of the present invention can very efficiently adsorb the fluorine-containing organic compound in water to be treated.

The average particle diameter of the activated carbon of the present embodiment is 0.1 mm or more, preferably 0.5 mm or more, and more preferably 1.0 mm or more. The average particle diameter of the activated carbon of the present embodiment is 10 mm or less, preferably 8 mm or less, and more preferably 7 mm or less. When the average particle diameter is equal to or more than the above lower limit, the void volume can be sufficiently secured, which is preferable. In the present specification, the average particle diameter of the activated carbon refers to an average particle diameter measured according to JIS K 1474.

The activated carbon of the present embodiment has a specific surface area (BET specific surface area) calculated by the BET method (multipoint method) in a nitrogen adsorption isotherm determined from the nitrogen adsorption amount at 77 K of 500 $m^2$/g or more and 2000 $m^2$/g or less. The BET specific surface area is preferably 550 $m^2$/g or more, more preferably 600 $m^2$/g or more. The BET specific surface area is preferably 1900 $m^2$/g or less, more preferably 1700 $m^2$/g or less. When the BET specific surface area is within the above ranges, the activated carbon of the present embodiment has excellent ability to remove the fluorine-containing organic compound (adsorption ability) and excellent mechanical strength.

The activated carbon of the present embodiment has voids inside. Having appropriate voids inside the activated carbon allows the activated carbon to efficiently remove the fluorine-containing organic compound in water to be treated when the activated carbon is used as a fluorine-containing organic compound removing material. As shown in the following Examples, in X-ray CT, the activated carbon of the present embodiment can be observed nondestructively, and measurement can be performed without damaging fine voids.

The activated carbon of the present embodiment has a porosity inside a particle of 10% or more and 40% or less as obtained by X-ray CT. The porosity is preferably 12% or more, more preferably 15% or more, and still more preferably 20% or more. The porosity is preferably 38% or less, and more preferably 35% or less. When the porosity is equal to or more than the above-described lower limit, the inside of the activated carbon can be suitably used for adsorption of the fluorine-containing organic compound. When the porosity is equal to or less than the above-described upper limit, the activated carbon has high mechanical strength and can maintain its shape.

The void inside the particle obtained by the X-ray CT is obtained as follows. First, continuously photograph a plurality of (1000 or more) sections of target activated carbon by X-ray CT (for example, Xradia 520 Versa manufactured by Carl Zeiss AG is used). Next, among the images obtained by photographing, extract 40 or more images present between the first photographed section and the last photographed section at equal intervals, and extract the portion corresponding to voids of each extracted section through image processing to obtain a void area per unit area of the section. Finally, determine the average value of 40 or more extracted images for the ratio of the void area per unit area of each section, and the average value is taken as the porosity inside the particle of the activated carbon obtained by X-ray CT. In the present specification, a void of about 1 $\mu m^2$ or more is detected as the void.

The activated carbon of the present embodiment preferably has an iodine adsorption amount of 900 mg/g or more. The iodine adsorption amount is preferably 1200 mg/g or less. The iodine adsorption amount is an indicator of the volume of pores smaller than 1 $\mu m$ in diameter. When the iodine adsorption amount is within the above range, the activated carbon can have more sufficient adsorption amount of the fluorine-containing organic compound while maintaining its strength.

Examples of the raw material of the activated carbon of the present embodiment include plant-based carbonaceous materials (e.g., plant-derived materials such as wood, wood shavings, charcoal, fruit shells, for example coconut shells and walnut shells, fruit seeds, pulp production byproducts, lignin, and blackstrap molasses), mineral-based carbonaceous materials (e.g., coal-based materials such as peat, lignite, brown coal, bituminous coal, anthracite, cokes, coal tar, and coal pitch; mineral-derived materials such as petroleum distillation residues and petroleum based materials, for example petroleum pitch), synthetic resin-based carbonaceous materials (e.g., materials derived from synthetic resins such as phenol resin, polyvinylidene chloride, and acrylic resin), and natural fiber-based carbonaceous materials (e.g., materials derived from natural fibers such as natural fibers, for example cellulose, and regenerated fibers, for example rayon). These carbonaceous materials may be used alone or in combination of two or more. It is known that organic fluorine compounds are adsorbed by activated carbon through hydrophobic interaction, and it is preferable to use a mineral-based carbonaceous material, and it is particularly preferable to use activated carbon derived from bituminous coal from the viewpoint of balance between high specific surface area and hydrophobicity, mechanical strength in heat treatment, and the like.

The activated carbon of the present embodiment may be produced, for example, by dry-mixing a carbonaceous material having a weak or stronger caking property among the carbonaceous materials described above with a slightly caking carbonaceous material, subjecting the mixture to a heat treatment, and then activating the obtained material. The carbonaceous material having a weak or stronger caking property is a carbonaceous material having a button index of more than 1. The slightly caking carbonaceous material is a carbonaceous material having a button index of 1 or less, and the button index may be 0. The button index is measured by placing a sample in a predetermined crucible, heating the sample under predetermined conditions, and comparing the generated residue with a standard contour, in accordance with the crucible expansion test method of JIS M 8801 6.

Examples of the carbonaceous material having a weak or stronger caking property include plant-based, fruit-shell-based, and mineral-based carbonaceous materials, but mineral-based carbonaceous materials are preferable. Among mineral-based carbonaceous materials, coal-based carbonaceous materials are preferable from the preceding reasons. As such a carbonaceous material, weakly caking coal having a button index of more than 1 and 4 or less is preferably used. When the caking property is insufficient and moldability is poor, strongly caking coal having a button index of more than 4, pitch, and the like may be mixed in an appropriate ratio.

As the slightly caking carbonaceous material, a mineral-based carbonaceous material is preferable, and among them, a coal-based carbonaceous material is preferable. In addition, the slightly caking carbonaceous material preferably contains at least one of an alkali metal and an alkaline earth metal. Examples of the alkali metal include potassium and sodium. Examples of the alkaline earth metal include calcium. The amount of the alkali metal and the alkaline earth metal in the slightly caking carbonaceous material containing the alkali metal and/or the alkaline earth metal are preferably 300 ppm or more and 1100 ppm or less in terms of the total amount of metal atoms. Among alkali metals and alkaline earth metals, calcium is particularly preferable, and it is more preferable to use a carbonaceous material having a calcium content of 300 ppm or more and 1000 ppm or less from the viewpoint of hardness and moldability.

In the method for producing activated carbon of the present embodiment, when a raw material in which at least one of an alkali metal and an alkaline earth metal is homogeneously and highly dispersed in the structure of the carbonaceous material is used, localization of pore formation hardly occurs and homogeneous pore formation is formed as compared with a method in which activation is performed after a specific amount of a metal compound is added to the carbonaceous material, and appropriate pore distribution can be obtained and hardness can increase, which is preferable.

To produce the activated carbon of the present embodiment, first, a carbonaceous material having a weak or stronger caking property (hereinafter, may be referred to as material 1) and a slightly caking carbonaceous material (hereinafter, may be referred to as material 2 and preferably contains an alkali metal and/or an alkaline earth metal) are dry-mixed and pulverized. In addition to these carbonaceous materials 1 and 2, there is no problem with adding a strongly caking coal, pitch, or the like as long as the effect of the present invention is not impaired. The method of dry mixing and pulverizing the materials is not limited to particular methods as long as mixing and pulverizing can be performed to have a substantially constant ratio of the carbonaceous materials. The dry mixing and pulverizing may be easily performed with a jaw crusher, a bucket crusher, a cone crusher, a single roll crusher, a double roll crusher, an impact crusher, a ball mill, a lot mill, a high-speed mixer, or the like.

The mixing ratio between the material 1 and the material 2 may be determined according to the ability to remove intended fluorine-containing organic compound and hardness of the carbonaceous material serving as a raw material, but when the proportion of the material 1 is too high, the hardness increases, whereas formation of voids having a pore diameter of 500 nm or more is reduced, and the ability to remove the fluorine-containing organic compound tends to decrease. When the proportion of the material 1 is too low, moldability tends to deteriorate and the hardness tends to decrease. Thus, it is preferable that the material 1 and the material 2 are mixed at a weight ratio of preferably 1 : 9 to 9 : 1, more preferably 2 : 8 to 6 : 4.

In the molding step, the material 1 and the material 2 are dry-mixed and pulverized, and then once molded by pressure molding. The pressure in the pressure molding is preferably 140 kg/cm$^2$ or more, more preferably 180 kg/cm$^2$ or more. The pressure in the pressure molding is preferably 600 kg/cm$^2$ or less, more preferably 400 kg/cm$^2$ or less, still more preferably 360 kg/cm$^2$ or less. When the pressure is equal to or more than the above lower limit, the materials 1 and 2 can be sufficiently combined without returning to a single material at the time of pulverization in the next step, and voids can be suitably formed. When the pressure is equal to or less than the above upper limit, appropriate voids can be generated in the activated carbon generation step. The device for pressure molding is not particularly limited, and a roll press type molding device, a disc die pelleter type molding device, a ring die pelleter type molding device, an extrusion type molding device, or the like may be used. The pressure and the shape of the molded product are not particularly limited either, and the shape may be appropriately determined according to the purpose, such as a cylindrical shape, a cylindrical shape, a pellet shape, a spherical shape, and a sheet shape. These sizes are not limited to particular values either.

The obtained molded product is pulverized by a known pulverizer, for example, a crusher such as a jaw crusher or a roll crusher, a ball mill, a lot mill, or a high-speed mixer. The pulverized product is regulated into a predetermined size such as 8/30 mesh, and it is practical to size the pulverized product to have a particle diameter range as activated carbon of preferably about 0.01 to 5.0 mm, more preferably about 0.05 to 3.0 mm, and to have an average particle diameter of preferably about 0.3 to 3.0 mm, more preferably about 0.5 to 1.0 mm. The sized pulverized product (granules) is subjected to a heat treatment. The heat treatment may be performed by heating to 550 to 750°C under a reducing gas atmosphere. To obtain a carbide or activated carbon having higher performance and higher strength, it is preferable to perform the heat treatment in two stages, for example, raising the temperature to 200 to 400°C at 5 to 30 °C/min under an oxidizing gas atmosphere, and further raising the temperature to 550 to 750°C at 5 to 30 °C/min under a reducing gas atmosphere.

The heat-treated (dry-distilled) pulverized product is further activated to become activated carbon. As the activation, gas activation performed at 400 to 1000°C under an atmosphere of an oxidizing gas such as water vapor, carbon dioxide, air, propane combustion exhaust gas, LPG, or a mixed gas thereof, chemical activation performed at about 400 to 800°C in the presence of a chemical such as zinc chloride, phosphoric acid, calcium chloride, or potassium sulfide, or the like may be employed. Of these, it is preferable to employ combustion gas activation performed at 900 to 1000°C under a flow of combustion gas derived from combustion of a mixed gas in which the ratio between air and LPG is in a range of about 1 : 0.03 to 1 : 0.06. The activation yield may be appropriately determined as necessary from the relationship between the ability to remove the fluorine-containing organic compound and the hardness.

After the activation, the obtained activated carbon is acid-washed with dilute hydrochloric acid or the like to adjust the pH to 5.0 or more and 7.0 or less, whereby the activated carbon of the present embodiment can be obtained. The pH of activated carbon referred to herein is a pH measured in accordance with JIS K 1474.

The activated carbon of the present embodiment may be subjected to a post treatment such as chemical modification of the surface or causing the surface to physically support a functional substance depending on the application. Examples of such surface modification include attachment of a metal salt such as silver or iron, an oxide, or a mineral acid, and a treatment for acidifying the surface.

Examples of the fluorine-containing organic compound to be treated (adsorbed) with the activated carbon of the present embodiment include amphiphilic perfluoroalkane derivatives such as perfluoroalkanecarboxylic acid, perfluoroalkylsulfonic acid, and 1H,1H,2H,2H-perfluoroalkyl alcohol. Examples of the perfluoroalkanecarboxylic acid include perfluorobutanoic acid, perfluoropentanoic acid, perfluorohexanoic acid, perfluoroheptanoic acid, perfluorooctanoic acid, perfluorononanoic acid, perfluorodecanoic acid, perfluoroundecanoic acid, and perfluorododecanoic acid. Examples of the perfluoroalkylsulfonic acid include perfluorobutanesulfonic acid, perfluorohexanesulfonic acid, and perfluorooctanesulfonic acid. In particular, the activated carbon of the present embodiment is excellent in adsorption ability (removal ability) to perfluoropentanoic acid, perfluorohexanoic acid, perfluoroheptanoic acid, perfluorooctanoic acid, perfluorooctanesulfonic acid, and especially to perfluorooctanoic acid.

The activated carbon of the present embodiment can efficiently adsorb the fluorine-containing organic compound for a long period of time, and thus it can be suitably used as a fluorine-containing organic compound removing material. Thus, the present invention also includes a fluorine-containing organic compound removing material including the above-described activated carbon.

Another aspect of the present invention is a water treatment method including a step of bringing the activated carbon into contact with water to be treated containing a fluorine-containing organic compound to obtain treated water having a fluorine-containing organic compound content of 0.1 ppb or less. The water treatment method of the present invention, having the above-described configuration, can obtain treated water in which the fluorine-containing organic compound is removed with very high efficiency from water to be treated containing the fluorine-containing organic compound. Fluorine-containing organic compounds have unique properties (excellent in heat resistance and chemical resistance, usable under severe conditions, having no light absorbing ability, etc.) that cannot be achieved by other substances. Thus, the compounds are used in various applications. On the other hand, it was revealed that some fluorine-containing organic compounds, such as perfluorocarboxylic acids typified by perfluorooctanoic acid (PFOA: $C_7F_{15}COOH$) and perfluorosulfonic acids typified by perfluorooctanesulfonic acid (PFOS: $C_8F_{17}SO_3H$) are accumulated in the body of wild animals, and subsequent various studies have revealed that the fluorine-containing organic compounds are present in the environment on a global scale. Considering such circumstances, setting the fluorine-containing organic compound content in water to 0.1 ppb or less contributes to environmental risk reduction.

As a result of intensive studies, the inventors of the present invention have found that with the conventional activated carbons, there is a limit to reducing fluorine-containing organic compounds even when a large amount of activated carbon is added to water to be treated having a low fluorine-containing organic compound concentration, whereas the use of the specific activated carbon of the present embodiment enables treatment with very high efficiency.

In general, it is well known that the performance of activated carbon depends on its specific surface area. However, surprisingly, the treatment efficiency of an aqueous solution having a low fluorine-containing organic compound concentration greatly depends on the properties inside activated carbon, and there is no clear correlation with the specific surface area.

That is, the present embodiment can efficiently remove the fluorine-containing organic compound and obtain treated water containing almost no fluorine-containing organic compound (having a content of the fluorine-containing organic compound of 0.1 ppb or less) by using activated carbon in which the porosity in the particle measured by X-ray CT shows a certain numerical value.

A fluorine-containing organic compound removing step in the present embodiment is a step of bringing water to be treated containing the fluorine-containing organic compound into contact with a fluorine-containing organic compound removing material including specific activated carbon.

The concentration of the fluorine-containing organic compound in the water to be treated is not limited to particular values because it varies depending on the place where the water to be treated is collected, and the concentration is usually in the range of 0.1 to 1000 ppb.

The water treatment method of the present embodiment can remove the fluorine-containing organic compound with high efficiency even when the concentration of the fluorine-containing organic compound in the water to be treated is 1000 ppb or less, or even 100 ppb or less.

In the present specification, the concentration of the fluorine-containing organic compound may be measured under the following conditions using a liquid chromatograph-tandem mass spectrometer (LC/MS/MS) manufactured by Waters Corporation. This is a useful measurement method particularly in a case where the concentration is 100 ppb or less.

- HPLC system main body: 2695 Separation module
- Mobile phase solvent: 45 vol% of acetonitrile/55 vol% of 0.15% acetic acid aqueous solution
- HPLC column: Atlantis dC 18 3 $\mu$m 2.1 × 30 mm
- Tandem quadrupole mass spectrometer: Quattro micro API

The contact between the water to be treated and the activated carbon may be a batch type contact in which the activated carbon is added to the water to be treated or may be a continuous type contact in which the water to be treated is circulated through a column filled with the activated carbon. The treatment may be performed a plurality of times by a batch type contact, may be performed a plurality of times by a continuous type contact, or may be performed by a combination of a batch type contact and a continuous type contact. The packed column in the continuous contact may be any of a mobile bed type, a fixed bed type, and a fluidized bed type.

In the batch type contact, the contact time between the water to be treated and the activated carbon may be appropriately set according to the use amount of the activated carbon, the concentration of the fluorine-containing organic compound in the water to be treated, and the like, but it is preferably 60 minutes or more from the viewpoint of securing a sufficient removal rate.

The amount of the activated carbon with respect to the water to be treated is preferably 0.015 mass% or more, more preferably 0.05 mass% or more, still more preferably 0.10 mass% or more with respect to the water to be treated, from the viewpoint of securing sufficient treatment efficiency. The amount is preferably 20 mass% or less, more preferably 10 mass% or less, and still more preferably 5 mass% or less from the viewpoint of volumetric efficiency.

The water treatment method of the embodiment is to obtain treated water having a fluorine-containing organic matter concentration of 0.1 ppb or less. The concentration of the fluorine-containing organic compound in the treated water to be obtained is more preferably 0.01 ppb or less, still more preferably 0.005 ppb or less.

The water treatment method of the present embodiment may further include a step of removing the activated carbon when the treated water contains the activated carbon. The method for removing the activated carbon is not particularly limited, and for example, a known method such as filtration, sedimentation, centrifugation, or separation with a flocculant may be employed.

Still another aspect of the present invention is a water treatment device including the activated carbon of the present embodiment. The activated carbon of the water treatment device may be contained in a treatment tank in which water to be treated is treated, or may be provided as an activated carbon packed column through which water to be treated passes. The form of the activated carbon is not limited as long as the activated carbon is provided in such a manner that water to be treated and the activated carbon can be appropriately brought into contact with each other. The method of bringing water to be treated and the activated carbon into contact with each other in the water treatment device may be a batch method or a continuous method. The packed column in the continuous contact may be any of a mobile bed type, a fixed bed type, and a fluidized bed type.

The present specification discloses the technology having various aspects as described above, and the main technology is summarized below.

That is, the activated carbon according to an aspect of the present invention has an average particle diameter of 0.1 to 10 mm, a BET specific surface area of 500 $m^2$/g or more and 2000 $m^2$/g or less, and a porosity inside a particle of 10% or more and 40% or less as obtained by X-ray CT.

With such a configuration, the activated carbon of the present invention can very efficiently adsorb the fluorine-containing organic compound in water to be treated.

The activated carbon preferably has an iodine adsorption amount of 900 mg/g or more and 1200 mg/g or less.

It is considered that this allows the activated carbon to have more sufficient adsorption amount of the fluorine-containing organic compound while maintaining the strength.

Further, it is preferable that coal is used as a raw material of the activated carbon. It is considered that this configuration achieves improved balance between high specific surface area and hydrophobicity and improved characteristics such as mechanical strength in heat treatment.

The fluorine-containing organic compound removing material according to another aspect of the present invention includes the activated carbon described above. The water treatment device according to still another aspect of the present invention includes the activated carbon described above.

A water treatment method according to still another aspect of the present invention includes a step of bringing the activated carbon into contact with water to be treated containing a fluorine-containing organic compound to obtain treated water having a fluorine-containing organic compound content of 0.1 ppb or less. With the above-described configuration, treated water in which the fluorine-containing organic compound is removed can be obtained with very high efficiency from water to be treated containing the fluorine-containing organic compound.

In the water treatment method, the fluorine-containing organic compound is preferably at least one selected from the group consisting of perfluorooctanoic acid, perfluorooctanoic acid salt, perfluorooctanesulfonic acid, and perfluorooctanesulfonic acid salt. It is considered that the effect of the present invention can be further exhibited with such fluorine-containing organic compounds.

**Examples**

Next, the present invention will be described based on Examples and Comparative Examples, but the present invention is not limited to these Examples.

(BET specific surface area)

An approximate expression derived from the BET equation will be described below.
[Mathematical Formula 1]

$$\frac{p/p_0}{v(1 - p/p_0)} = \frac{1}{v_m c} + \frac{(c-1)p}{v_m c p_0} \qquad (I)$$

Using the above approximate expression (I), $v_m$ was obtained by substituting an adsorption amount (v) actually measured at a predetermined phase body pressure ($p/p_0$) by a multipoint method using nitrogen adsorption at a liquid nitrogen temperature, and the specific surface area (SSA: unit: $m^2/g$) of the sample was calculated with the following formula (II).
[Mathematical Formula 2]

$$\text{Specific Surface Area} = \left(\frac{v_m N a}{22400}\right) \times 10^{-18} \qquad (II)$$

In the above formula, $v_m$ is an adsorption amount ($cm^3/g$) required to form a monolayer on the sample surface, v is an adsorption amount ($cm^3/g$) actually measured, $p_0$ is a saturated vapor pressure, p is an absolute pressure, c is a constant (reflecting adsorption heat), N is the Avogadro constant of $6.022 \times 10^{23}$, and a($nm^2$) is an area occupied by adsorbent molecules on the sample surface (molecular occupied cross-sectional area).

Specifically, the adsorption amount of nitrogen to a carbon material at liquid nitrogen temperature was measured as follows using "Autosorb-iQ-MP" manufactured by Quantachrome Corporation. A carbon material as a measurement sample was filled in a sample tube, and the sample tube was once depressurized in a state of being cooled to -196°C (77K), and then nitrogen (purity: 99.999%) was caused to adsorb to the measurement sample at a desired relative pressure. The amount of nitrogen adsorbed to the sample when the pressure reached equilibrium pressure at each desired relative pressure was defined as the adsorption gas amount v.

(Porosity measurement inside granular activated carbon)

1. X-ray CT measurement of activated carbon

Measurement was performed under the following conditions using Xradia 520 Versa manufactured by Carl Zeiss AG.

The internal structure was shown by a circle having a diameter of 1 mm with a source intensity of 120 kV, an output of 10 W, a pixel size of 1 μm, an imaging range of 1029 μm, and an exposure time of 1 s. In the photographing, 1000 or more images were continuously photographed from an end to the opposite end of the granular activated carbon.

2. Image processing

Among the images photographed by the X-ray CT, 40 or more images present between the first photographed section and the last photographed section were extracted at equal intervals. Each extracted image was captured using Image J developed by the National Institutes of Health (NIH). The image unit was converted from pixel to actual measured range (μm), and the image was converted to 32-bit black and white. With the threshold value of the image set to 120, a portion determined to be a hole in the X-ray CT image was displayed in black. The area of the black range of the obtained image was calculated and divided by the measurement range to determine the void area ratio of each image. The average value of the porosities obtained from the extracted images was taken as the porosity obtained by X-ray CT of the subject activated carbon.

(Iodine adsorption amount)

According to JIS K 1474, the activated carbon of different amounts was added to a 0.05 mol/L iodine solution (potassium iodide was also dissolved: 0.15 mol/L), the mixture was shaken for 15 minutes, the activated carbon was then centrifuged, the supernatant was titrated with a 0.1 mol/L sodium thiosulfate solution to determine the residual iodine concentration, then an adsorption isotherm was generated, and the adsorption amount at a residual iodine concentration of 2.5 g/L was defined as the iodine adsorption performance.

(Average particle diameter of pre-activation granules and activated carbon)

For the pre-activation granules or activated carbon, a particle size cumulative diagram on a mass basis was prepared in accordance with JIS K 1474. In the particle size cumulative diagram, a horizontal line was drawn on the horizontal axis from the intersection of the vertical line at the point of 50% on the horizontal axis and the particle size cumulative line, to determine the mesh size (mm) of sieve indicated by the intersection, and the value was determined as the average particle diameter.

(Concentration of fluorine-containing organic compound (PFOA, etc.) in water to be treated and treated water)

Measurement was performed using a liquid chromatograph-tandem mass spectrometer (LC/MS/MS) manufactured by Waters Corporation.

- HPLC system main body: 2695 Separation module
- Mobile phase solvent: 45 vol% of acetonitrile/55 vol% of 0.15% acetic acid aqueous solution
- HPLC column: Atlantis dC 18 3 μm 2.1 × 30 mm
- Tandem quadrupole mass spectrometer: Quattro micro API

[Example 1] A weakly caking bituminous coal (button index 3) having a fixed carbon content of 59.5 wt% and an ash content of 0.7 wt% was used as the material 1, and a slightly caking bituminous coal (button index 0.5) having a fixed carbon content of 48.3 wt% or more and an ash content of 0.7 wt% and containing 45 ppm of sodium and 800 ppm of calcium was used as the material 2. These material 1 and the material 2 were mixed and pulverized at a weight ratio of 3 : 7 with a ball mill, and the obtained powder was filled in a container having a diameter of 4 cm and a length of 15 cm and subjected to pressure molding with a pressure of 280 kg/cm$^2$ at 100°C using a roll press type pressure molding machine manufactured by YAMAMOTO SUIATU KOGYOSHO CO., LTD. Thereafter, the obtained material was crushed by a jaw crusher and sized into granules having a particle diameter range of 0.1 to 2.0 mm and an average particle diameter of 0.95 mm.

Then, the granules were put into an external heat type rotary kiln, the temperature was raised to 300°C at a rate of 5 °C/min in an oxidizing gas atmosphere and then held at 300°C for 2 hours. Subsequently, the temperature was raised to 650°C at a rate of 8.75 °C/min in a reducing gas atmosphere to carbonize the granules. The carbonized coal in an amount of 75.0 g converted as having a volatile matter content of 0 g was placed in a fluid furnace having an inner diameter of 57 mm and a height of 600 mm, and subjected to combustion gas activation at 950°C under a flow of combustion gas of 20 L (liter, the same applies hereinafter)/min and 0.85 L/min of LPG to obtain an activation yield of 50%, whereby an activated carbon was obtained.

The obtained activated carbon was washed with acid water, then washed with boiling water six times to adjust the pH to 6.5 ± 0.5, and then dried at 120°C for 2 to 3 hours.

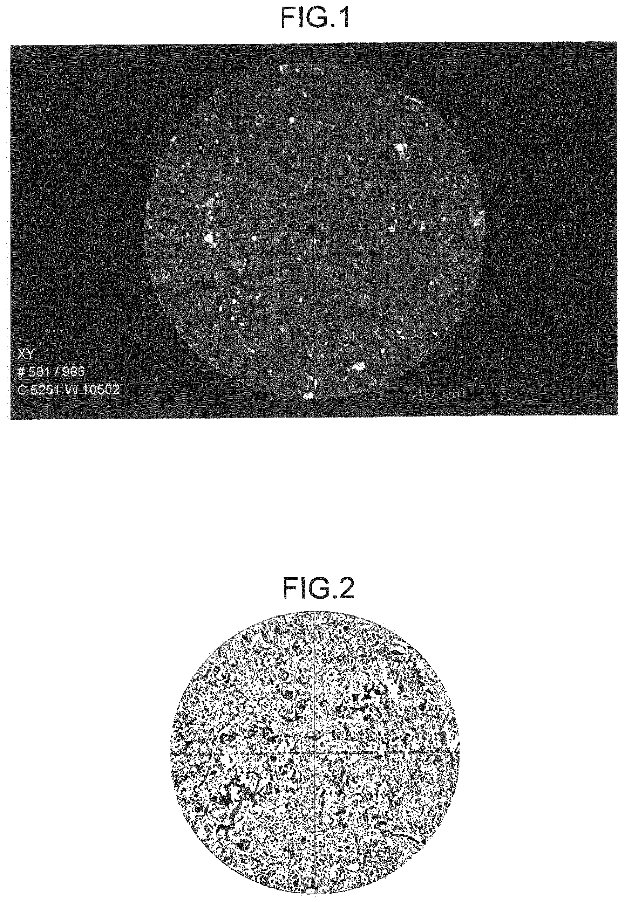

An X-ray CT measurement image of the obtained activated carbon under the above conditions is shown in FIG. 1, and the image analysis result is shown in FIG. 2. FIGS. 1 and 2 show that the activated carbon of Example 1 has appropriate voids. Various physical properties were measured according to the above method. The water treatment experiments described later were performed using the activated carbon obtained here.

[Example 2]

Activated carbon was obtained in the same manner as in Example 1 except that pressure molding was performed at 350 kg/cm². Measurement of various physical properties and the water treatment experiments described later using the activated carbon were performed.

[Example 3]

An activated carbon was obtained in the same manner as in Example 1 except that pressure molding was performed at 180 kg/cm². Measurement of physical properties and the water treatment experiments described later using the activated carbon were performed.

[Example 4]

An activated carbon was obtained in the same manner as in Example 1 except that pressure molding was performed at 530 kg/cm². Measurement of physical properties and the water treatment experiments described later using the activated carbon were performed.

[Comparative Example 1]

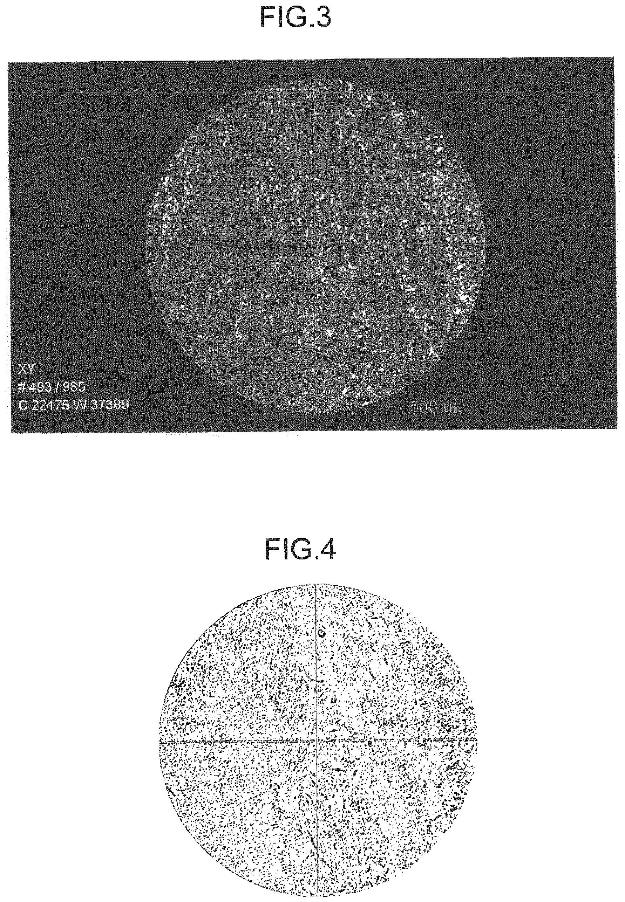

An activated carbon was obtained in the same manner as in Example 1 except that the material 2 was not mixed with the material 1, only the material 1 was used, and the material was sized into granules having a particle diameter range of 0.1 to 2.0 mm and an average particle diameter of 0.95 mm. Measurement of physical properties and the water treatment experiments described later using the activated carbon were performed. An X-ray CT measurement image of the obtained activated carbon under the above conditions is shown in FIG. 3, and the image analysis result is shown in FIG. 4. FIGS. 3 and 4 show that the activated carbon of Comparative Example 1 has fewer voids than that of Example 1.

[Comparative Example 2]

An activated carbon was obtained in the same manner as in Example 1 except that pressure molding was performed at 120 kg/cm². Measurement of physical properties and the water treatment experiments described later using the activated carbon were performed.

[Comparative Example 3]

An activated carbon was obtained in the same manner as in Example 1 except that the material 2 was not mixed with the material 1, only the material 1 was used, and the material was sized into granules having a particle diameter range of 0.01 to 0.60 mm and an average particle diameter of 0.08 mm. Measurement of physical properties and the water treatment experiments described later using the activated carbon were performed.

The BET specific surface area, the average particle diameter, the porosity obtained by X-ray CT, and the iodine adsorption amount of the activated carbon of Example 1 to 4 and Comparative Example 1 to 3 are shown in Table 1.

[Table 1]

| | Specific surface area m²/g | Average particle diameter mm | Porosity % | Iodine adsorption amount mg/g |
|---|---|---|---|---|
| Example 1 | 920 | 0.9 | 32 | 1000 |
| Example 2 | 840 | 0.8 | 28 | 950 |
| Example 3 | 1006 | 0.6 | 36 | 1110 |

(continued)

|  | Specific surface area m²/g | Average particle diameter mm | Porosity % | Iodine adsorption amount mg/g |
|---|---|---|---|---|
| Example 4 | 805 | 0.7 | 13 | 915 |
| Comparative Example 1 | 860 | 0.8 | 8 | 890 |
| Comparative Example 2 | 1120 | 0.7 | 44 | 1210 |
| Comparative Example 3 | 1010 | 0.08 | 9 | 1100 |

(Water treatment experiment 1: breakthrough time measurement)

The activated carbon obtained in Example 1 in an amount of 10 g was filled in a tube of 10 mmφ × 300 mm. PFOA (96% pure product manufactured by Aldrich) was dissolved in tap water so that the PFOA concentration was 10 ppb. This solution was injected into the activated carbon at 10 ml/min in an upflow manner to continuously obtain treated water. The obtained liquid was continuously collected, and the PFOA concentration in the treated water was detected under the above measurement conditions. Among the detected PFOA concentrations, the lowest concentration was defined as the lowest PFOA detection concentration. The time when the detected PFOA concentration reached 0.15 ppb or more was defined as the breakthrough time.
The breakthrough time of the activated carbons obtained in Examples 2 to 4 and Comparative Examples 1 to 3 was also measured in the same manner as in Example 1. The results are shown in Table 2.

(Water treatment experiment 2: adsorption amount measurement)

The activated carbon obtained in each of Examples 1 to 4 and Comparative Examples 1 to 3 was recovered after the breakthrough time, subjected to hot air drying at 60°C for 12 hours, and then subjected to vacuum drying at 1 Torr and 20°C for 3 hours, and the weight increase was measured. The results are shown in Table 2.

[Table 2]

|  | Lowest PFOA detection concentration | Breakthrough time (min) | PFOA adsorption amount (μg) |
|---|---|---|---|
| Example 1 | Below detection limit (0.001 ppb) | 23856 | 23.2 |
| Example 2 | Below detection limit | 18133 | 17.8 |
| Example 3 | Below detection limit | 14022 | 14.0 |
| Example 4 | Below detection limit | 13093 | 13.1 |
| Comparative Example 1 | 0.11 ppb | 11255 | 11.1 |
| Comparative Example 2 | 0.13 ppb | Crushed at 3255 | 3.0 |
| Comparative Example 3 | Below detection limit (0.001 ppb) | 5229 Interrupted because of large measurement load with liquid flow resistance | 5.5 |

(Discussion)

From the results in Table 2, it was confirmed that using the activated carbon of Examples satisfying the requirements of the present invention can remove the fluorine-containing organic compound (PFOA) in a very efficient manner. On the other hand, the activated carbon of Comparative Example 1 in which the porosity was too small or the activated carbon of Comparative Example 2 in which the porosity was too large was not able to remove the fluorine-containing organic compound. The activated carbon of Comparative Example 2 in which the porosity was too large was not able to obtain sufficient strength, and it crushed in a short period of time. In Comparative Example 3, the average particle diameter of the activated carbon was too small, the packing density was high, the liquid flow resistance was increased, and the liquid flow resistance was increased in a short breakthrough time. The activated carbon had insufficient adsorption amount of the fluorine-containing organic compound in the water treatment experiment 2.

From these results, it was found that the porosity of activated carbon having a predetermined specific surface area and average particle diameter is important for removal of the fluorine-containing organic compound, and the larger the porosity to some extent, the better the removal performance. However, it was also confirmed that when the porosity exceeds 40%, not only the removal performance deteriorates but also the mechanical strength deteriorates.

This application is based on Japanese Patent Application No. 2020-158516 filed on September 23, 2020, the contents of which are included in the present application.

Although the present invention is appropriately and fully described above through specific embodiments to express the present invention, it should be recognized that a person of ordinary skill in the art can easily modify and/or improve the foregoing embodiments. Therefore, unless a change or improvement made by a person skilled in the art is at a level departing from the scope of rights of the claims described in the claims, the change or improvement is interpreted to be included in the scope of rights of the claims.

**Industrial Applicability**

The activated carbon of the present invention can efficiently adsorb a fluorine-containing organic compound in water to be treated. Thus, the activated carbon of the present invention can be suitably used as a fluorine-containing organic compound removing material. In addition, the water treatment method of the present invention can be suitably used for treatment, purification, and the like of industrial wastewater. The water treatment method of the present invention, having the above-described configuration, can obtain treated water in which the fluorine-containing organic matter is removed with very high efficiency from water to be treated containing the fluorine-containing organic compound. Such an effect of the present invention is particularly remarkable when the concentration of the fluorine-containing organic matter contained in the water to be treated is low.

**Claims**

1.  An activated carbon having an average particle diameter of 0.1 to 10 mm, a BET specific surface area of 500 $m^2/g$ or more and 2000 $m^2/g$ or less, and a porosity inside a particle of 10% or more and 40% or less as obtained by X-ray CT.

2.  The activated carbon according to claim 1, wherein the activated carbon has an iodine adsorption amount of 900 mg/g or more and 1200 mg/g or less.

3.  The activated carbon according to claim 1 or 2, wherein coal is used as a raw material of the activated carbon.

4.  A fluorine-containing organic compound removing material comprising the activated carbon according to any one of claims 1 to 3.

5.  A water treatment device comprising the activated carbon according to any one of claims 1 to 3.

6.  A water treatment method comprising a step of bringing the activated carbon according to any one of claim 1 to 3 into contact with water to be treated containing a fluorine-containing organic compound to obtain treated water having a fluorine-containing organic compound content of 0.1 ppb or less.

7.  The water treatment method according to claim 6, wherein the fluorine-containing organic compound is at least one selected from the group consisting of perfluorooctanoic acid, perfluorooctanoic acid salt, perfluorooctanesulfonic acid, and perfluorooctanesulfonic acid salt.

## FIG.1

XY
# 501 / 986
C 5251 W 10502

## FIG.2

# FIG.3

# FIG.4

<div align="center">

**INTERNATIONAL SEARCH REPORT**

</div>

| | International application No. |
|---|---|
| | **PCT/JP2021/033257** |

**A.    CLASSIFICATION OF SUBJECT MATTER**

*C01B 32/318*(2017.01)i; *C02F 1/28*(2006.01)i; *B01J 20/20*(2006.01)i
FI:    C01B32/318; B01J20/20 B; C02F1/28 D; B01J20/20 A

According to International Patent Classification (IPC) or to both national classification and IPC

**B.    FIELDS SEARCHED**

Minimum documentation searched (classification system followed by classification symbols)

C01B32/318; C02F1/28; B01J20/20

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

JSTPlus/JMEDPlus/JST7580 (JDreamIII)

**C.    DOCUMENTS CONSIDERED TO BE RELEVANT**

| Category* | Citation of document, with indication, where appropriate, of the relevant passages | Relevant to claim No. |
|---|---|---|
| A | JP 2007-229605 A (NATIONAL INSTITUTE OF ADVANCED INDUSTRIAL SCIENCE AND TECHNOLOGY) 13 September 2007 (2007-09-13) entire text | 1-7 |
| A | JP 2002-69286 A (MITSUBISHI CHEMICAL CORP.) 08 March 2002 (2002-03-08) entire text | 1-7 |
| A | JP 63-182209 A (MITSUBISHI PENCIL CO., LTD.) 27 July 1988 (1988-07-27) entire text | 1-7 |

☐ Further documents are listed in the continuation of Box C.      ☑ See patent family annex.

| | |
|---|---|
| *      Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **08 November 2021** | **22 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2021/033257**

| Patent document cited in search report | | | Publication date (day/month/year) | Patent family member(s) | Publication date (day/month/year) |
|---|---|---|---|---|---|
| JP | 2007-229605 | A | 13 September 2007 | (Family: none) | |
| JP | 2002-69286 | A | 08 March 2002 | (Family: none) | |
| JP | 63-182209 | A | 27 July 1988 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050000904 A

- JP 2020158516 A